# EUROPÄISCHE PATENTANMELDUNG

(11) **EP 2 360 632 A1**
(43) Veröffentlichungstag der Anmeldung: **24.08.2011**
(21) Anmeldenummer: 11000959.4
(22) Anmeldetag: 07.02.2011
(51) Int. Cl.: G06Q 10/00

(54) **Wartungssystem**

(30) Priorität: 17.02.2010 DE 102010008340
(71) Anmelder: Heidelberger Druckmaschinen Aktiengesellschaft, 69115 Heidelberg (DE)
(72) Erfinder: Lutz, Werner, 6723 Oftersheim (DE); Ratz, Georg, 76709 Kronau (DE); Stark, Wolfgang, 68239 Mannheim (DE)

(57) **Zusammenfassung**

Die Erfindung betrifft ein Wartungssystem mit wenigstens einem Verwaltungsrechner (2) mit einer Anzeigevorrichtung (3) und einem Bedienelement (17) zur Verwaltung von Maschinen (7), welche Bauteile aufweisen. Die Erfindung zeichnet sich dadurch aus, dass im Verwaltungsrechner (2) die jeweilige Konfiguration der Bauteile ausgelieferter Maschinen (7) gespeichert ist, dass beim Austausch eines Bauteils in einer dieser Maschinen (7) im Verwaltungsrechner (2) anstelle des bisherigen Bauteils das in der jeweiligen Maschine (7) eingesetzte Ersatzteil im Verwaltungsrechner (2) abgespeichert wird und dass mittels Betätigung des Bedienelements (17) für jede der im Verwaltungsrechner (2) hinterlegten Maschinen (7) die aktuelle Konfiguration der Bauteile auf der Anzeigevorrichtung (3) abrufbar ist.

## Beschreibung

Die vorliegende Erfindung betrifft ein Verfahren.zur Wartung und ein Wartungssystem mit wenigstens einem Verwaltungsrechner mit einer Anzeigevorrichtung und einem Bedienelement zur Verwaltung von Maschinen, welche Bauteile aufweisen.

Teure investitionsgüter wie Druckmaschinen müssen möglichst rund um die Uhr verfügbar sein, um ihre Investitionskosten einspielen zu können. Um diese hohe Verfügbarkeit zu gewährleisten, ist es wichtig, dass Wartungs- und Reparaturvorgänge bei diesen Maschinen optimal geplant und auf ein Minimum reduziert werden, um unnötige Ausfallzeiten zu vermeiden. Als ein besonders geeignetes Mittel hat sich in den letzten Jahren die Fernwartung erwiesen. Femwartungssysteme bestehen meistens aus einem Rechner, welcher an die zu wartende Maschine angeschlossen ist, und einem Verwaltungsrechner bei einem Maschinenhersteller oder dessen Wartungspartner, wobei der Verwaltungsrechner und der Maschinenrechner über eine Internetverbindung miteinander kommunizieren können. Dies hat den großen Vorteil, dass Störungsmeldungen von der zu wartenden Maschine automatisch an den Verwaltungsrechner des Herstellers übertragen und entsprechende Wartungs- und Reparaturvorgänge sofort automatisch in die Wege geleitet werden können. Des Weiteren ist es möglich, Probleme schon im Vorfeld zu erkennen und so Wartungs- und Reparaturmaßnahmen zu ergreifen, bevor eine umfangreichere Reparatur einen entsprechend langen Stillstand verursachen würde.

Ein derartiges Verfahren und System für Fernwartung ist aus dem Patent US 6,903,831 B1 bekannt. Wenn an einer Druckmaschine ein Fehler an einem elektronischen Bauteil auftritt, so wird dem Bediener zunächst dieses elektronische Bauteil mit einer entsprechenden Fehlermeldung verbunden auf einem Bildschirm angezeigt. Des Weiteren erfährt der Bediener die zugeordnete Ersatzteilnummer und gegebenenfalls eine entsprechende Ersatzteilzeichnung, so dass er das Bedienelement leicht bestellen kann.
Zusätzlich ist der Steuerungsrechner der Druckmaschine über eine Telekommunikationsverbindung mit einem Fernwartungsrechner verbunden, wenn ein Programm zur Eliminierung des aufgetretenen Fehlers aufgerufen wird. Über diesen Femwartungsrechner kann auch die elektronische Dokumentation auf dem Maschinenrechner aktualisiert werden, wenn in den Maschinenrechner neue Bauteile eingebaut oder ergänzt werden. Zusätzlich ist das Bediensystem des Maschinenrechners in der Lage, eine Maschinenhistorie aufzunehmen und abzuspeichern, um so aufgetretene Fehlermeldungen festzuhalten.

In der Patentanmeldung US 2005/0203755 A1 ist ein Verfahren und ein System sowie ein Programm für ein integriertes Wartungsmanagement offenbart. Ein derartiges System baut darauf auf, dass eine Datenbank geschaffen wird, in der sämtliche Daten gesammelt werden, welche für Personen interessant sind, die sich mit den Maschinen eines bestimmten Herstellers beschäftigen. Damit soll der Aufbau von Wartungspartnern in einem Franchise System erleichtert werden, da diesen Partnern dann ein Zugang zu dem Server mit den gesammelten Daten gegeben werden kann, so dass jeder Partner entsprechenden Zugang zu den Daten hat. Wenn ein Partner das Franchise System verlässt, so kann der Hersteller ihm den Zugang sperren und dem früheren Franchise Partner ist der Zugang zu den Daten des Herstellers ab sofort verwehrt. In der Datenbank werden Vertriebsdaten, Verkäufe an Kunden, Garantien, Wartungsanfragen, Reparaturarbeiten, Ersatzteile und Kontodaten abgespeichert, so dass sich die Franchise Partner bei Zugriff auf die Datenbank jederzeit ein Bild von ihrem Kunden machen können.

Der vorliegende Stand der Technik bietet jedoch keine Lösung an, wie sich das Wartungspersonal jederzeit und schnell den aktuellen baulichen Zustand einer jeden ausgelieferten und zu wartenden Maschine anzeigen lassen kann. Dies ist insbesondere bei komplexen Maschinen wie Druckmaschinen wichtig, wo häufig im Nachhinein nach der Auslieferung Veränderungen an der Maschine vorgenommen werden, welche dem Wartungspersonal und dem Druckmaschinenhersteller zunächst nicht bekannt sind.

Es ist daher Aufgabe der vorliegenden Erfindung, ein Wartungssystem und ein Wartungsverfahren zu schaffen, welches einen schnellen Zugriff auf den aktuellen baulichen Zustand einer bereits ausgelieferten Maschine oder Anlage erlaubt, um Reparatur und Wartungsmaßnahmen besser planen zu können.

Diese Aufgabe wird erfindungsgemäß durch Patentanspruch 1 gelöst. Vorteilhafte Ausgestaltungen der Erfindung sind den Unteransprüchen und den Zeichnungen zu entnehmen. Das erfindungsgemäße Wartungssystem eignet sich insbesondere zur Wartung komplexer Maschinen oder größerer Anlagen. Diese Anlagen und Maschinen weisen meistens eine relativ lange Lebensdauer von bis zu 20 Jahren.auf und werden während ihrer gesamten Lebensdauer häufig verändert oder ergänzt. Aufgrund dieser Lebensdauer ist die Wahrscheinlichkeit groß, dass in der Maschinengeneration Ersatzteile herstellerseitig unter anderen Materialnummern weiterentwickelt werden, die rückwärts zum alten ausgelieferten Zustand austauschbar sind. Alternativ kann auch eine größere Baugruppe als Ersatzlösung für ein ausgefallenes Teil defmiert werden. Bei Wartungs- und Reparaturaufträgen entstand dadurch in der Vergangenheit meist großer Mehraufwand, da die vor Ort angetroffene Maschine oder Anlage nicht dem erwarteten baulichen Zustand entspricht. In diesem Fall müssen dann andere Ersatzteile beschafft werden oder ein anderer Servicetechniker hingeschickt werden. Dies führt zu unnötigen Reisetätigkeiten, Rückfragen und verlängerten Wartezeiten des Kunden, wobei gerade bei teuren Maschinen und Anlagen die Kunden nicht bereit sind, diese Stillstandzeiten zu akzeptieren.

Durch den häufigen Unterschied in der Materialnummer des ursprünglich ausgelieferten defekten Teils und der Materialnummer für das dafür gelieferte Ersatzteil bzw. der gelieferten Ersatzteilbaugruppe ist eine Ursachenerkennung von technisch Problemen anhand von Ersatzteilverbräuchen schwer möglich. Zusätzlich erschwert wird dies, wenn das defekte Teil in einer Maschine mehrfach vorkommt. Wird die Beziehung zwischen der Materialnummer des defekten, ursprünglich ausgelieferten Teils und dem dafür gelieferten Ersatzteil sowie der konkrete Verbauungsort aus der maschinenspezifischen Stückliste in der technischen Klärung vor oder mit der Lieferung des Ersatzteils in einem Verwaltungssystem vermerkt, kann dies spätere Schadensursachenanalysen erheblich vereinfachen und beschleunigen und somit Kosten vermeiden. Die Beziehung zwischen defektem und geliefertem Ersatzteil in Verbindung mit der Prüfung des defekten Teils auf Vorhandensein in der Maschine erlaubt das automatische Plausibilisieren von zu liefernden Ersatzteilen.

Das erfindungsgemäße Wartungssystem besteht im Wesentlichen aus einem Verwaltungsrechner, welcher beim Hersteller der Maschine oder bei einem beauftragten Servicepartner steht. Dieser Verwaltungsrechner kann wiederum aus mehreren Rechnern wie Servern und Clients bestehen, wobei wenigstens einer dieser Rechner eine Anzeigevorrichtung mit einem Bedienelement zur Verwaltung der ausgelieferten Maschinen des Herstellers aufweist. Diese ausgelieferten Maschinen setzen sich aus einer Vielzahl von Bauteilen zusammen, die in einer mehrstufig strukturierten maschinenspezifischen Stückliste angezeigt werden können. Erfindungsgemäß ist nun vorgesehen, dass im Verwaltungsrechner die jeweilige Konfiguration der Bauteile ausgelieferter Maschinen gespeichert ist, wobei beim Austausch eines Bauteils in einer dieser Maschinen im Verwaltungsrechner anstelle des bisherigen Bauteils das in der jeweiligen Maschine eingesetzte Ersatzteil im Verwaltungsrechner abgespeichert wird, und dass mittels Betätigung des Bedienelements für jede im Verwaltungsrechner hinterlegte Maschine die aktuelle Konfiguration der Bauteile auf der Anzeigevorrichtung abrufbar ist. Dies bedeutet, dass für jede ausgelieferte Maschine eine maschinenspezifische Stückliste existiert, in der zumindest sämtliche Bauteile abgespeichert sind, welche Wartungs- und Reparaturbedarf unterliegen.

Auch neue ergänzende, zusätzliche Bauteile werden für jede Maschine abgespeichert. Auf diese Art und Weise ist es möglich, sich per Knopfdruck auf der Anzeigevorrichtung des Verwaltungsrechners immer den aktuellen baulichen Zustand einer ausgelieferten Maschine anzeigen zu lassen und so passgenau Wartungs- und Reparaturaufträge in die Wege zu leiten. Kernstück ist dabei eine maschinenspezifische Ersatzteilliste, welche auf dem Verwaltungsrechner abgespeichert ist. Für jeden Wartungs- oder Störfall wird eine solche Ersatzteilliste angelegt. Damit ist es möglich, dass nach Austausch eines Bauteils das an dessen Stelle eingesetzte in der Liste abgespeichert wird, so dass der aktuelle bauliche Zustand der Maschine jederzeit in der maschinenspezifischen Stückliste nachgeführt wird. Auf die gleiche Art und Weise werden Bauteile ergänzt, welche bisher nicht in der Maschine vorhanden sind und zusätzlich an- oder eingebaut worden sind, nur werden bei solchen zusätzlichen Bauteilen keine alten Bauteile aus der maschinenspezifischen Stückliste gelöscht. Da in der jeweiligen maschinenspezifischen Stückliste immer der aktuelle bauliche Zustand vermerkt ist, kann dann das Wartungspersonal des Herstellers vor der Anzeigevorrichtung jederzeit darauf zurückgreifen und sich die aktuelle Konfiguration der Bauteile auf der Anzeigevorrichtung anzeigen lassen. Somit ist ein schneller Zugriff auf den aktuellen Teilezustand einer jeden ausgelieferten Maschine möglich. An den Verwaltungsrechner können noch weitere Rechner angeschlossen sein, welche die Abwicklung der Reparatur- und Wartungsaufträge vornehmen, insbesondere ein SAP System.

In einer ersten Ausgestaltung der Erfindung ist vorgesehen, dass der Verwaltungsrechner ein Modul zur Entgegennahme von Störungsmeldungen der Maschinen aufweist. Dieses Modul kann als Softwaremodul in den Verwaltungsrechner integriert sein und über eine Internetverbindung mit dem Rechner einer ausgelieferten Maschine kommunizieren. Wenn an einer der ausgelieferten Maschinen eine Störung auftritt, so wird an dieser Maschine eine Fehlermeldung erzeugt, welche die Identität der Maschine in Form einer eindeutigen kodierten Nummer, eine Fehlermeldung und möglicherweise betroffene Teile enthält. Diese Fehlermeldung kann z. B. per Email über das Internet an das Modul zur Entgegennahme von Störungsmeldungen im Verwaltungsrechner übertragen werden. Auf diese Art und Weise können Störungsmeldungen schnell und ohne viel Zutun des Betreibers der Maschine an den Verwaltungsrechner des Herstellers oder des Servicebetriebs übertragen werden, so dass eine schnelle Abarbeitung der Störungsmeldung möglich ist.

Vorteilhafterweise ist außerdem vorgesehen, dass der Verwaltungsrechner ein Modul aufweist, welches die Existenz der Maschine im Verwaltungsrechner überprüft. Dieses Modul dient zunächst dazu, anhand der in der Störungsmeldung übermittelten Maschinennummer zu überprüfen, ob diese Maschine überhaupt im Verwaltungsrechner vorhanden ist. Nur wenn eine solche Existenz festgestellt wird, kann die Maschine von dem erfindungsgemäßen Wartungssystem entsprechend betreut werden. Sollte die Maschine noch nicht im Verwaltungsrechner vorhanden sein, so muss sich das Servicepersonal selbst entweder vor Ort oder über telefonische Kontaktaufnahme über die baulichen Gegebenheiten der Maschine informieren und die Daten nachträglich im Verwaltungsrechner einpflegen.

Des Weiteren ist vorgesehen, dass der Verwaltungsrechner ein Modul aufweist, welches entsprechend der gemeldeten Störung eine für die maschinenspezifischen Ersatzteilliste auswählt und einen entsprechenden Auftrag zur Lieferung und/oder Installation des Ersatzteils in der gestörten Maschine erstellt. Dieses Modul ist wie die anderen Module in Software realisiert und ist dazu da, das Servicepersonal über das auszutauschende Ersatzteil zu informieren, welches für den Reparaturauftrag benötigt wird. Ebenso kann dieses Modul eine entsprechende Information an ein Lager der Ersatzteile senden, wodurch automatisch das entsprechende Ersatzteil ausgewählt, verpackt und an den Kunden oder das Servicepersonal vor Ort verschickt wird.

In einer weiteren Ausgestaltung der Erfindung ist vorgesehen, dass der Verwaltungsrechner ein Modul zur Prüfung der Verfügbarkeit von Ersatzteilen einer Maschine aufweist, welche eine Störungsmeldung an den Verwaltungsrechner übertragen hat. Dieses Modul liest die Nummern der betroffenen Teile in der maschinenspezifischen Ersatzteilliste und vergleicht diese mit verfügbaren Ersatzteilen des Herstellers oder des Servicepartners. Damit kann automatisch festgestellt werden, ob das auszutauschende Teil sofort verfügbar ist oder gegebenenfalls erst bestellt werden muss.

Vorteilhafterweise ist auch vorgesehen, dass der Verwaltungsrechner ein Modul aufweist, welches über eine Internetverbindung eine Bestätigung des Einbaus der benötigten Ersatzteile mit Eingabe des tatsächlich eingebauten Ersatzteils entgegennimmt und an die maschinenspezifische Ersatzteilliste im Verwaltungsrechner übergibt. Wenn der Servicetechniker beim Kunden vor Ort eine Reparatur vornimmt, so kann er entweder das ersetzte Teil durch ein entsprechendes neues ersetzen oder, wenn das entsprechende Teil nicht mehr vorhanden ist oder es ein verbessertes Ersatzteil gibt, dieses andere Ersatzteil in die Maschine einbauen. Damit auf dem Verwaltungsrechner jederzeit der aktuelle bauliche Zustand der ausgelieferten Maschinen vorhanden ist, muss dem Verwaltungsrechner diese Veränderung mitgeteilt werden. Dazu kann das Servicepersonal mit einem Mobiltelefon wie einem Smartphone oder einem PDA ausgerüstet sein, welches z. B. eine drahtlose Internetverbindung aufbauen kann. Auf dem Mobiltelefon wird dann eine Eingabemaske mit der zugehörigen Maschinennummer angezeigt und das Servicepersonal gibt die Nummer des tatsächlich eingebauten Ersatzteils ein. Diese Daten werden zusammen an den Verwaltungsrechner übertragen, so dass in der maschinenspezifischen Ersatzteilliste im Verwaltungsrechner das bisherige Bauteil durch das tatsächlich eingebaute Ersatzteil ersetzt wird. Auf diese Art und Weise wird die Aktualisierung des baulichen Zustands einer jeden ausgelieferten Maschine sichergestellt.

Es ist des Weiteren vorgesehen, dass ein Modul zur Qualitätssicherung vorhanden ist. Dieses Modul zur Qualitätssicherung hat die Aufgabe, das bisher eingebaute Bauteil mit dem tatsächlich geplanten und eingebauten Ersatzteil zu vergleichen und so festzustellen, ob ein identisches Bauteil, ein vorgesehenes Nachfolge-Teil eingesetzt wurde oder womöglich ein anderes Bauteil. Bei zu großen oder nicht plausiblen Abweichungen zwischen den ausgetauschten Teilen kann eine entsprechende Meldung verfasst werden, so dass gegebenenfalls das Servicepersonal vor dem Verwaltungsrechner überprüft, ob das neu eingebaute Ersatzteil tatsächlich geeignet ist oder ob hier eine fehlerhafte Reparatur oder Bestellung vorgenommen wurde. Auf diese Art und Weise kann die Qualität der vorgenommenen Bestellung und Reparatur beurteilt und festgehalten werden.
Die Maschinen Entwicklung bekommt durch diese Art der automatisierten Datenhaltung nicht nur Informationen über ungewöhnlich hohen Ersatzteilverbrauch, sondern auch welche der ursprünglich eingebauten Teile mit ihrer Maschinenverbauung, dem exakten Einbauort bei Maschinenmehrfachverwendung, vorzeitig ausgefallen sind. Dadurch können technische Probleme früher erkannt werden.

Vorteilhafterweise ist außerdem vorgesehen, dass der Verwaltungsrechner auf der Anzeigevorrichtung ein Bildschirmmenü anzeigt, welches die Auswahl aller derjenigen Maschinen ermöglicht, die in dem Verwaltungsrechner abgespeichert sind. Auf diese Art und Weise kann das Wartungspersonal vor dem Verwaltungsrechner durch Eingabe einer bestimmten Seriennummer einer ausgelieferten Maschine mittels Mouse oder Tatstatur in das Bildschirmmenü sich die aktuelle Bauteilekonfiguration der ausgewählten Maschine anzeigen lassen.

Das erfindungsgemäße Wartungssystem besteht im Wesentlichen aus dem Verwaltungsrechner, welcher eine Internetverbindung aufweist und einer Software mit den entsprechenden Modulen, welche die Wartungsvorgänge einleiten, protokollieren und insbesondere die Aktualisierung der maschinenspezifischen Ersatzteilliste und schließlich die Aktualisierung der maschinenspezifischen Stückliste sicherstellen. Somit umfasst die vorliegende Erfindung auch ein Verfahren zur Wartung mittels eines Verwaltungsrechners mit einer Anzeigevorrichtung und einem Bedienelement zur Verwaltung von Maschinen, welche Bauteile aufweisen, wobei im Verwaltungsrechner die jeweilige Konfiguration der Bauteile ausgelieferter Maschinen abgespeichert wird, und beim Austausch eines Bauteils in einer dieser Maschinen im Verwaltungsrechner anstelle des bisherigen Bauteils das in der jeweiligen Maschine eingesetzte Ersatzteil im Verwaltungsrechner abgespeichert wird und mittels Betätigung des Bedienelements für jede der im Verwaltungsrechner hinterlegten Maschinen die aktuelle Konfiguration der Bauteile auf der Anzeigevorrichtung abgerufen wird. Dies umfasst auch eine entsprechende Software auf einem Datenträger, welche das zuvor genannte Verfahren steuert und ablaufen lässt.

Die vorliegende Erfindung wird nachfolgend anhand mehrerer Figuren näher beschrieben und erläutert. Es zeigen:
- Figur 1: einen schematischen Überblick über die Komponenten des erfmdungsgemäßen Wartungssystems und
- Figur 2: die Abläufe in dem erfindungsgemäßen Wartungssystem.

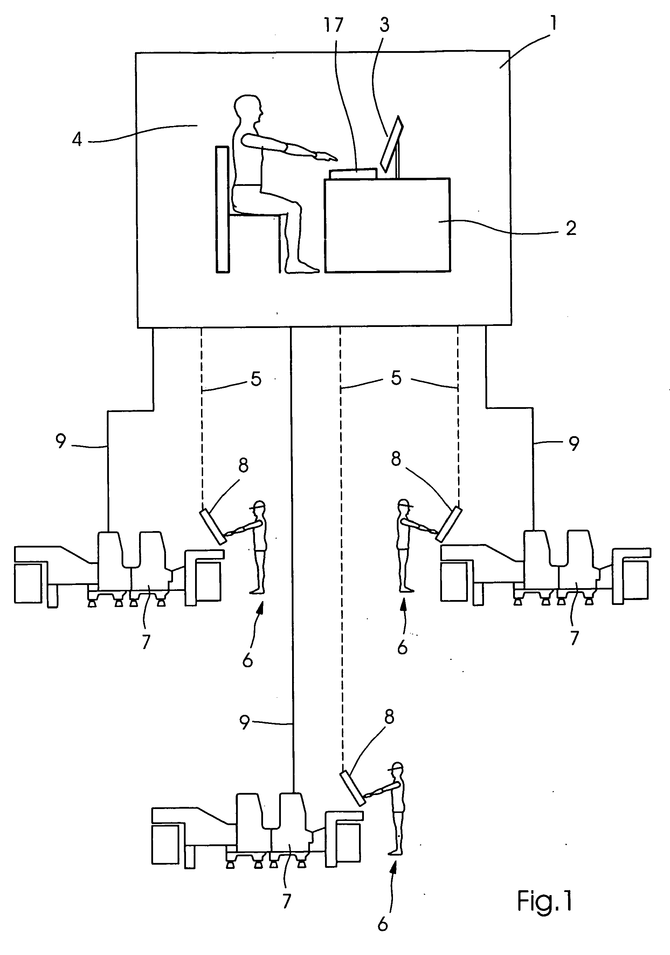

Figur 1 zeigt einen Verwaltungsrechner 2, welcher sich im Verwaltungsgebäude 1 eines Druckmaschinenherstellers befindet. Dieser Verwaltungsrechner 2 weist einen Bildschirm 3 und eine Tastatur 17 auf, über die der Verwaltungsrechner 2 vom Personal 4 des Druckmaschinenherstellers bedient werden kann. Durch Betätigung der Tastatur 17 kann der Mitarbeiter 4 jederzeit auf jede beliebige ausgelieferte Maschine 7 und deren baulichen Zustand zugreifen und so sich den baulichen Zustand jeder ausgelieferten Maschine 7 auf dem Bildschirm 3 anzeigen lassen. Der Verwaltungsrechner 2 ist über Internetverbindungen 9 mit den Maschinenrechnern der ausgelieferten Druckmaschinen 7 verbunden. Über die Internetverbindung 9 können Störungsmeldungen von den Druckmaschinen 7 an den Verwaltungsrechner 2 gesendet und dort verarbeitet werden. Umgekehrt kann der Verwaltungsrechner 2 über die Internetverbindung 9 Reparaturhinweise oder neue Software übertragen und außerdem gezielt den Maschinenzustand abfragen.

Wenn ein Reparatureinsatz vor Ort an einer der Maschinen 7 notwendig ist, wird ein Servicetechniker 6 mit den entsprechenden Ersatzteilen losgeschickt, um die Ersatzteile vor Ort beim Kunden in die Maschine 7 einzubauen. Nach erfolgter Reparatur 7 gibt der Servicetechniker 6 die tatsächlich eingebauten Ersatzteile auf einem mitgeführten Smartphone 8 ein, welches eine drahtlose Internetverbindung 5 zum Verwaltungsrechner 2 aufbauen kann. Auf diese Art und Weise werden die Daten der betroffenen Maschine 7 und der eingebauten Ersatzteile an den Verwaltungsrechner 2 übertragen.

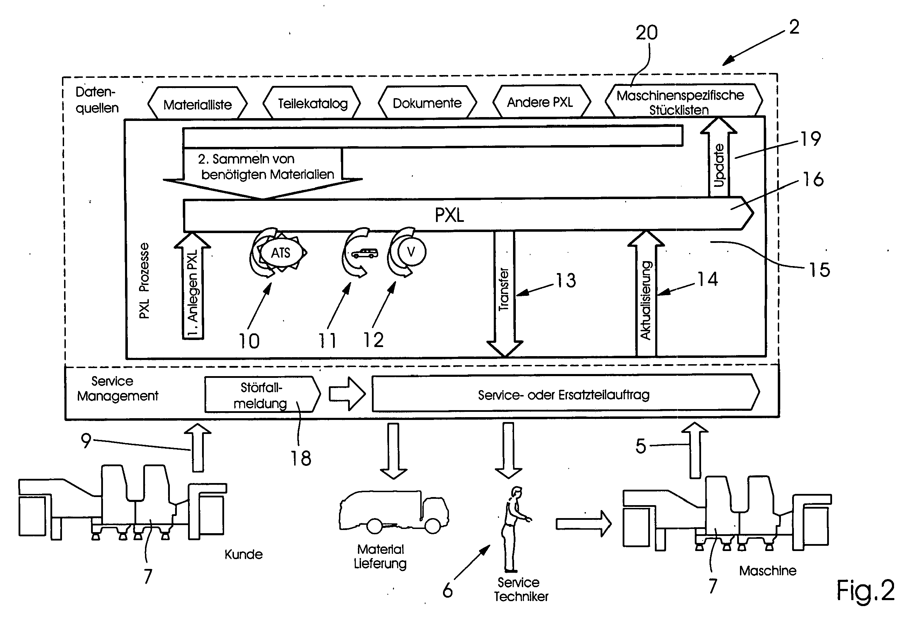

In Figur 2 sind die verschiedenen Softwaremodule im Verwaltungsrechner 2 und deren Funktion dargestellt. Wie bereits erwähnt wurde, können Störungsmeldungen von einer Druckmaschine 7 automatisch über eine Internetverbindung 9 an den Verwaltungsrechner 2 übertragen werden. Diese übertragenen Störungsmeldungen werden zunächst in einem Modul 18 zur Entgegennahme von Störungsmeldungen abgearbeitet und so die betroffenen Bauteile der Maschine 7 und die Maschinennummer der betroffenen Maschine 7 abgefragt und im Verwaltungsrechner 2 abgelegt. In dem Verwaltungsrechner 2 sind für jede ausgelieferte Maschine 7 maschinenspezifische Stücklisten 20 vorhanden, in der sämtliche relevanten Maschinenbauteile abgespeichert sind. Im Störungs- oder Wartungsfall legt der Mitarbeiter des Herstellers 4 eine maschinenspezifische Ersatzteilliste PXL 16 an. In diese maschinenspezifische Ersatzteilliste werden die benötigten bzw. die defekten Bauteile aufgenommen. Nach Entgegennahme der Störungsmeldung wird zunächst mit einem Modul 11 zur Prüfung der Verfügbarkeit von Ersatzteilen die Verfügbarkeit des angeforderten Ersatzteils geklärt. Sollte das benötigte Ersatzteil nicht verfügbar sein, so wird mit einem weiteren Modul 10 zur automatischen Alternativersatzteilsuche nach passenden alternativen Ersatzteilen gesucht. Des Weiteren wird in einem Modul 12 zur Prüfung der Existenz der Ersatzteile in der Maschine 7 geprüft, ob die angeforderten Ersatzteile überhaupt in der betroffenen Maschine 7 vorhanden sind. Auch dazu wird auf die Daten der maschinenspezifischen Stückliste 20 zurückgegriffen. Wenn die entsprechenden Ersatzteile ermittelt wurden, so wird in einem weiteren Modul 13 zum Transfer der Ersatzteile aus der PXL 16 in den Ersatzteilauftrag automatisch ein Wartungs-und Ersatzteilauftrag erstellt und ein entsprechender Servicetechniker 6 mit dem Einbau der ermittelten Ersatzteile beauftragt.

Dieser Servicetechniker 6 ist mit einem Smartphone 8 ausgerüstet und baut beim Kunden in die Druckmaschine 7 die entsprechenden Ersatzteile ein. Nach Abschluss der Reparatur gibt der Servicetechniker 6 die Daten der eingebauten Ersatzteile und die Maschinenummer der Druckmaschine 7 in sein Smartphone 8 ein, welches über eine drahtlose Internetverbindung 5 die Daten an das Modul 14 zur Bestätigung des Einbaus der Ersatzteile im Verwaltungsrechner 2 schickt. Diese Daten werden dann in die maschinenspezifische Ersatzteilliste PXL 16 der Maschine 7 eingefügt. Mittels des Moduls 19 werden die Daten der Bauteile aus der maschinenspezifischen Ersatzteilliste PXL 16 in die maschinenspezifische Stückliste 20 übertragen, so dass die ausgebauten Teile in der maschinenspezifischen Stückliste 20 durch die neu eingebauten Teile ersetzt werden. Dies ist das Kernstück der vorliegenden Erfindung, da auf diese Art und Weise die maschinenspezifische Stückliste 20 für jede ausgelieferte Maschine 7 immer automatisch aktualisiert wird.

Weiterhin ist in Figur 2 im Verwaltungsrechner 2 ein Modul 15 zur Qualitätssicherung vorhanden, welches die bisher in der PXL 16 vorhandenen Ersatzteile mit den neu eingebauten Ersatzteilen vergleicht und gegebenenfalls Abweichungen protokolliert und bei unerklärlichen Abweichungen gegebenenfalls eine Warnmeldung an den Mitarbeiter 4 des Druckmaschinenherstellers schickt, welche dieser auf seinem Bildschirm 3 angezeigt bekommt. Auf diese Art und Weise wird überprüft, ob der Austausch der Ersatzteile korrekt und plausibel ist. In der PXL 16 ist nicht nur die Ersatzteilnummer gespeichert, sondern auch eine Beschreibung des jeweiligen Bauteils und möglichst auch der Einbauort dieses Bauteils. Auf diese Art und Weise kann der Mitarbeiter des Druckmaschinenherstellers 4 vor dem Bildschirm 3 leicht erkennen, um welches Bauteil es sich handelt und wo dieses Bauteil auszutauschen ist.

Die vorliegende Erfindung ermöglicht so zum Einen eine automatische Verwaltung erfolgreicher Servicelösungen, welche für spätere Recherchen genutzt werden können. Außerdem erfolgt eine genaue Dokumentation, so dass jederzeit nachvollziehbar ist, welches Teil nach Ausfall eines Bauteils anstelle des defekten Teils eingebaut wurde. Auf diese Art und Weise lässt sich der Wartungsprozess weiter automatisieren und eine präzise Dokumentation der Wartungsprozesse und der gewarteten Maschinen 7 erreichen.

### Bezugszeichenliste

- 1: Gebäude des Druckmaschinenherstellers
- 2: Verwaltungsrechner
- 3: Bildschirm
- 4: Mitarbeiter des Druckmaschinenherstellers
- 5: Drahtlose Internetverbindung
- 6: Servicetechniker
- 7: Druckmaschine
- 8: Smartphone
- 9: Internetverbindung
- 10: Modul zur automatischen Altemativersatzteilsuche
- 11: Modul zur Prüfung der Verfügbarkeit von Ersatzteilen
- 12: Modul zur Prüfung der Existenz der Ersatzteile in der Maschine
- 13: Modul zum Transfer der Ersatzteile aus der PXL in den Ersatzteilauftrag
- 14: Modul zur Bestätigung des Einbaus der Ersatzteile
- 15: Modul zur Qualitätssicherung
- 16: Maschinenspezifische Ersatzteilliste PXL
- 17: Tastatur
- 18: Modul zur Entgegennahme von Störungsmeldungen
- 19: Modul zur Aktualisierung der maschinenspezifischen Stückliste
- 20: Maschinenspezifische Stückliste

## Patentansprüche

1. Wartungssystem mit wenigstens einem Verwaltungsrechner (2) mit einer Anzeigevorrichtung (3) und einem Bedienelement (17) zur Verwaltung von Maschinen (7), welche Bauteile aufweisen,
**dadurch gekennzeichnet,**
**dass** im Verwaltungsrechner (2) die jeweilige Konfiguration der Bauteile ausgelieferter Maschinen (7) gespeichert ist, dass beim Austausch eines Bauteils in einer dieser Maschinen (7) anstelle des bisherigen Bauteils das in der jeweiligen Maschine (7) eingesetzte Ersatzteil im Verwaltungsrechner (2) abgespeichert wird, und dass mittels Betätigung des Bedienelements (17) für jede der im Verwaltungsrechner (2) hinterlegten Maschinen (7) die aktuelle Konfiguration der Bauteile auf der Anzeigevorrichtung (3) abrufbar ist.

2. Wartungssystem nach Anspruch 1
**dadurch gekennzeichnet,**
**dass** der Verwaltungsrechner (2) ein Modul zur Entgegennahme von Störungsmeldungen (18) der Maschinen (7) aufweist.

3. Wartungssystem nach Anspruch 1 oder 2,
**dadurch gekennzeichnet,**
**dass** der Verwaltungsrechner (2) ein Modul zur Prüfung der Verfügbarkeit von Ersatzteilen (11) einer Maschine (7) aufweist, welche eine Störungsmeldung an den Verwaltungsrechner (2) übertragen hat.

4. System nach einem der vorhergehenden Ansprüche,
**dadurch gekennzeichnet,**
**dass** der Verwaltungsrechner (2) ein Modul (12) aufweist, welches die Existenz der Maschine (7) im Verwaltungsrechner (2) überprüft.

5. System nach einem der vorhergehenden Ansprüche,
**dadurch gekennzeichnet,**
**dass** der Verwaltungsrechner (2) ein Modul (13) aufweist, welches entsprechend der gemeldeten Störung das passende Ersatzteil aus einer für die Maschine spezifischen Ersatzteilliste (16) auswählt und einen entsprechenden Auftrag zur Lieferung und/oder Installation des Ersatzteils in der gestörten Maschine (7) erstellt.

6. Wartungssystem nach einem der vorhergehenden Ansprüche,
**dadurch gekennzeichnet,**
**dass** der Verwaltungsrechner (2) ein Modul (14) aufweist, welches über eine Internetverbindung (5) eine Bestätigung des Einbaus der benötigten Ersatzteile mit Eingabe des tatsächlich eingebauten Ersatzteils entgegennimmt und an die maschinenspezifische Ersatzteilliste (16) im Verwaltungsrechner (2) übergibt.

7. Wartungssystem nach Anspruch 6,
**dadurch gekennzeichnet,**
**dass** nach Bestätigung des eingebauten Ersatzteils dieses Ersatzteil in der maschinenspezifischen Stückliste (20) für die jeweilige Maschine anstelle des bisherigen eingebauten Teils ersetzt wird.

8. Wartungssystem nach einem der vorhergehenden Ansprüche,
**dadurch gekennzeichnet,**
**dass** ein Modul zur Qualitätssicherung (15) vorhanden ist.

9. Wartungssystem nach einem der vorhergehenden Ansprüche,
**dadurch gekennzeichnet,**
**dass** der Verwaltungsrechner (2) auf der Anzeigevorrichtung (3) ein Bildschirmmenü anzeigt, welches die Auswahl einer derjenigen Maschinen (7) ermöglicht, die in dem Verwaltungsrechner (2) abgespeichert ist.

10. Wartungssystem nach Anspruch 9,
**dadurch gekennzeichnet,**
**dass** nach erfolgter Auswahl mittels Tastatur (17) oder Computermouse über einen Button im Bildschirmmenü die aktuelle Konfiguration auf Basis der maschinenspezifischen Ersatzteilliste (16) der ausgewählten Maschine (7) dargestellt wird.
